# EUROPEAN PATENT APPLICATION

(11) **EP 4 610 162 A1**
(43) Date of publication of application: **03.09.2025**
(21) Application number: 24160399.2
(22) Date of filing: 28.02.2024
(51) Int. Cl.: B64C 1/14, B60J 3/04, E06B 9/24, B64D 11/00

(54) **SYSTEM AND METHOD FOR AUTOMATICALLY CONTROLLING A DIMMABLE WINDOW PANEL, AS WELL AS AIRCRAFT OR SPACECRAFT**

(71) Applicant: Airbus Operations GmbH, 21129 Hamburg (DE)
(72) Inventor: Mehrholz, Holger, Hamburg (DE); Greggersen, Annette, Hamburg (DE)

(57) **Abstract**

The present invention provides a system (10) for automatically controlling a dimmable window panel, in particular a dimmable window panel of an aircraft cabin and/or spacecraft cabin, the system (10) comprising: a dimmable window panel (11) of a cabin (12), wherein the dimmable window panel (11) has an adjustable light transmissivity; an optical detection unit (13) for detecting an illumination level inside the cabin (12); and a control unit (14), which is operatively coupled to the dimmable window panel (11) and to the optical detection unit (13), wherein the control unit (14) is configured to automatically adjust the light transmissivity based on the illumination level. Further the present invention provides an aircraft (1) comprising such a system (10) as well as a method (M) for automatically controlling a dimmable window panel, in particular a dimmable window panel of an aircraft cabin and/or spacecraft cabin.

## Description

The invention relates to a system as well as to a method for automatically controlling a dimmable window panel, in particular a dimmable window panel of an aircraft cabin and/or spacecraft cabin. The invention is furthermore concerned with an aircraft or spacecraft containing such a system.

Windows are commonly used on vehicles to provide protection from the elements while preserving visual acuity. Several examples of vehicles that benefit from the use of windows include spacecraft, aircraft, automobiles, boats, motorcycles, and trucks.

Conventional windows have only a single transmissivity state. Specifically, conventional windows transmit virtually all incoming light regardless of the ambient conditions (e.g., rain or shine, dusk or dawn, or noon or night). Such single state windows may be optimized for use under certain circumstances, such as periods of low incoming light (e.g., when a vehicle is traveling away from the sun or at night). However, under other circumstances such as periods of high incoming light (e.g., when a vehicle is traveling toward the sun or instruments are reflecting backlighting from the sun), or transitional periods of lighting where a lighting level is changing rapidly (e.g., when flying at an altitude with intermittent cloud cover), a window with other transmissivity states may be desired to minimize operator discomfort and improve visual acuity.

In an effort to minimize operator discomfort and improve visual acuity, vehicles with conventional windows are typically provided with sun shades or sun visors. However, sun shades and sun visors offer only limited protection. For example, sun shades may reduce transmissivity, but they are not capable of adapting to changing light conditions. Sun visors also reduce transmissivity - perhaps to zero - but generally cover only a portion of the surface area of the window. As such, operators of vehicles with conventional windows commonly rely upon sun glasses in addition to sun shades and sun visors to manually manage incoming light.

In recent years, variably dimmable windows or dimmable window panels, respectively, have been developed as an alternative to conventional windows. The transmissivity of a dimmable window can be controlled electronically, such as by controlling a voltage or electric field applied to the window. As such, dimmable windows present the opportunity to reduce or eliminate the need for mechanical devices, such as sun shades and sun visors, on vehicles. Variable dimmable windows also offer a potential for automation in order to reduce operator workload.

A dimmable window typically changes light transmission properties of the dimmable window when voltage or heat is applied to the window. For example, a dimmable window may be transparent, opaque, or may one or more intermediate settings between being transparent and opaque. The dimmable window may also be referred to as smart glass. Typically, a dimmable window may be selectively switched between a clear transparent setting, and a dimmed, for example opaque, setting. Thereby, the dimmable windows are usually controlled either manually to be opened/closed by the passenger or centralized by manual intervention of the aircraft crew, for example to force all dimmable windows to be transparent during takeoff or landing.

Aspects of the invention may provide solutions for automatically controlling a dimmable window panel.

According to the invention, this problem is solved in each case by the subject matters of the independent claims.

According to a first aspect of the invention, a system for automatically controlling a dimmable window panel, in particular a dimmable window panel of an aircraft cabin and/or spacecraft cabin, is provided. The system comprises a dimmable window panel of a cabin, wherein the dimmable window panel has an adjustable light transmissivity. The system further comprises an optical detection unit for detecting an illumination level inside the cabin, and a control unit. The control unit is operatively coupled to the dimmable window panel and to the optical detection unit, wherein the control unit is configured to automatically adjust the light transmissivity based on the illumination level.

According to a second aspect of the invention, an aircraft or spacecraft comprising a system according to the first aspect of the invention is provided.

According to a third aspect of the invention, a method for automatically controlling a dimmable window panel, in particular a dimmable window panel of an aircraft cabin and/or spacecraft cabin, is provided. The method comprises the step of detecting an illumination level inside a cabin, which comprises a dimmable window panel having an adjustable light transmissivity. Further, the method comprises the step of automatically adjusting the light transmissivity based on the illumination level by the use of a control unit. The control unit is operatively coupled to the dimmable window panel.

A fundamental concept of the invention is to provide an optical detection unit based system and method for automatically detecting illumination areas, in particular due to very bright sunlight, shining through windows in the cabin. The control unit can be configured to automatically adjust the light transmissivity such that the illumination level corresponds to a predetermined illumination level. For example, the light transmissivity can be controlled dynamically in real-time. Furthermore, changing illumination levels inside the cabin can be handled by a dynamic behavior for automatically adjusting the light transmissivity, for example. The control unit can be operatively coupled to the dimmable window panel and to the optical detection unit by wire and/or wireless. The dimmable window panel can comprise one dimmable window or more dimmable windows.

A particular advantage in the solution according to an aspect of the invention is that a more homogeneous illumination in the cabin can be achieved and/or situations for passengers being blinded by bright sunlight can be avoided. Advantageously, the sunlight that shines through the dimmable window panel can automatically be controlled to reach a more convenient level in the cabin, in particular without the need for further manual action for a passenger or a crew member.

Furthermore, the automatically respectively intelligent sunlight blocking could have a positive effect on the cabin environment. Another advantage of the present solution is that air conditioning efforts can be reduced.

Advantageous embodiments and further developments emerge from the description with reference to the figures.

According to some embodiments of the invention, the control unit is further configured to provide a manual adaption of the light transmissivity up to a maximum illumination level. Hence, a user or a crew member can adapt the light transmissivity manually without exceeding the maximum illumination level. Therefore, air conditioning efforts due to an increasing cabin temperature by sunlight can be limited and/or reduced. Furthermore, the illumination level in the cabin can be limited to the maximum illumination level such that passengers would not be blinded by sunlight, for example. The maximum illumination level can be set by a crew member or by the control unit depending on a daytime or an ambient condition, for example.

According to some further embodiments of the invention, the control unit is further configured to provide a manual adaption of the light transmissivity up to a minimum illumination level. Hence, a user or a crew member can adapt the light transmissivity manually without falling below the minimum illumination level. Furthermore, the illumination level in the cabin can be maintained to the minimum illumination level such that passengers do not need to switch on a lamp, for example, which can reduce energy consumption. The minimum illumination level can be set by a crew member or by the control unit depending on a daytime or an ambient condition, for example.

Alternatively, the control unit is configured to block a manual adaption of the light transmissivity or to provide a manual adaption of the light transmissivity without restrictions. The above described options for manual adaption of the light transmissivity can be switched depending on needs.

According to some further embodiments of the invention, the dimmable window panel comprises a plurality of dimmable windows each having an individually adjustable light transmissivity. Hence, a convenient illumination level inside the cabin can be optimized since such dimmable windows that are faced to sunlight can be made opaque, while such dimmable windows that are not faced to sunlight can be made clear transparent.

According to some further embodiments of the invention, the optical detection unit comprises a processing unit, which is configured to identify a hotspot area of the illumination level and to allocate the hotspot area to the corresponding dimmable window of the plurality of dimmable windows. Thus, the light transmissivity of the corresponding respectively affected dimmable window can be adjusted by the control unit, wherein a rest of the plurality of dimmable windows is not affected. That means, the processing unit can identify by video analytics a hotspot area of very bright sunlight coming through one or more dimmable windows of the plurality of dimmable windows in the field of view by analyzing an optical gain, for example by a predetermined contrast level, by a threshold and/or by a clipping detection. The clipping detection uses a predetermined clipping range of an illumination level, wherein the processing unit can be triggered when the illumination level is in the predetermined clipping range. Hence, the light transmissivity can be adjusted, in particular lowered or increased, by a gain measurement of the optical detection unit.

According to some further embodiments of the invention, the hotspot area is allocated to the corresponding dimmable window by predefined picture zones in a picture from the optical detection unit, wherein each predefined picture zone corresponds to one dimmable window.

According to some further embodiments of the invention, the hotspot area is allocated to the corresponding dimmable window by neural networks, wherein the neural networks are initially configured by sequentially changing the light transmissivity of each dimmable window and allocating a changed illumination level in each picture zone to the corresponding dimmable window. Hence, the allocation of the hotspot area can be provided according to the actual conditions in the cabin, in particular independent of individual conditions and/or configurations. Alternatively or additionally, the neural networks can be initially configured by allocating predefined picture zones to the plurality of dimmable windows based on information from a data base.

According to some further embodiments of the invention, the optical detection unit comprises a means for computer vision processing, and/or wherein the processing unit is configured to provide computer vision processing. For example, computer vision processing can be provided by a Neural Processing Unit, short NPU. Computer vision is a field of artificial intelligence that enables computers and systems to derive meaningful information from digital images, videos and other visual inputs - and take actions or make recommendations based on that information. Alternatively or additionally, the control unit is configured to provide computer vision processing. The system can be configured as a computer vision system.

Optionally, the optical detection unit can comprise a plurality of cameras, which are monitoring the inside of the cabin. When there is a plurality of dimmable windows, each camera can monitor one dimmable window or a subgroup of dimmable windows of the plurality of dimmable windows.

According to some further embodiments of the invention, the method further comprises a step of providing a manual adaption of the light transmissivity up to a maximum illumination level and/or a minimum illumination level.

According to some further embodiments of the invention, the dimmable window panel comprises a plurality of dimmable windows, wherein the light transmissivity of each dimmable window is individually adjusted. Hence, a convenient illumination level inside the cabin can be optimized since such dimmable windows that are faced to sunlight can be made opaque, while such dimmable windows that are not faced to sunlight can be made clear transparent.

According to some further embodiments of the invention, the method further comprises a step of identifying a hotspot area of the illumination level and allocating the hotspot area to the corresponding dimmable window of a plurality of dimmable windows. Thus, the light transmissivity of the corresponding respectively affected dimmable window can be adjusted, for example by the control unit, wherein a rest of the plurality of dimmable windows is not affected. That means, the processing unit can identify by video analytics a hotspot area of very bright sunlight coming through one or more dimmable windows of the plurality of dimmable windows in the field of view by analyzing an optical gain, for example by a predetermined contrast level, by a threshold and/or by a clipping detection. Hence, the light transmissivity can be adjusted, in particular lowered or increased, by a gain measurement of the optical detection unit.

According to some further embodiments of the invention, the hotspot area is allocated to the corresponding dimmable window by predefined picture zones in a picture from the optical detection unit, wherein each predefined picture zone corresponds to one dimmable window.

According to some further embodiments of the invention, the hotspot area is allocated to the corresponding dimmable window by neural networks, wherein the neural networks are initially configured by sequentially changing the light transmissivity of each dimmable window and allocating a changed illumination level in each picture zone to the corresponding dimmable window. Hence, the allocation of the hotspot area can be provided according to the actual conditions in the cabin, in particular independent of individual conditions and/or configurations. Alternatively or additionally, the neural networks can be initially configured by allocating predefined picture zones to the plurality of dimmable windows based on information from a data base.

The present invention is explained more specifically below on the basis of the exemplary embodiments indicated in the schematic figures, in which:
- Fig. 1: shows a schematic illustration of an aircraft comprising a system for automatically controlling a dimmable window panel of an aircraft cabin according to an embodiment of the invention;
- Fig. 2: shows a schematic illustration of a system for automatically controlling a dimmable window panel according to a further embodiment of the invention;
- Fig. 3: shows a flow chart for a method for automatically controlling a dimmable window panel according to a further embodiment of the invention.

The accompanying figures are intended to convey a further understanding of the embodiments of the invention. They illustrate embodiments and are used in conjunction with the description to explain principles and concepts of the invention. Other embodiments and many of the cited advantages emerge in light of the drawings. The elements of the drawings are not necessarily shown to scale in relation to one another. Direction-indicating terminology such as for example "at the top", "at the bottom", "on the left", "on the right", "above", "below", "horizontally", "vertically", "at the front", "at the rear" and similar statements are merely used for explanatory purposes and do not serve to restrict the generality to specific configurations as shown in the figures.

In the figures of the drawing, elements, features and components that are the same, have the same function and have the same effect are each provided with the same reference signs - unless explained otherwise.

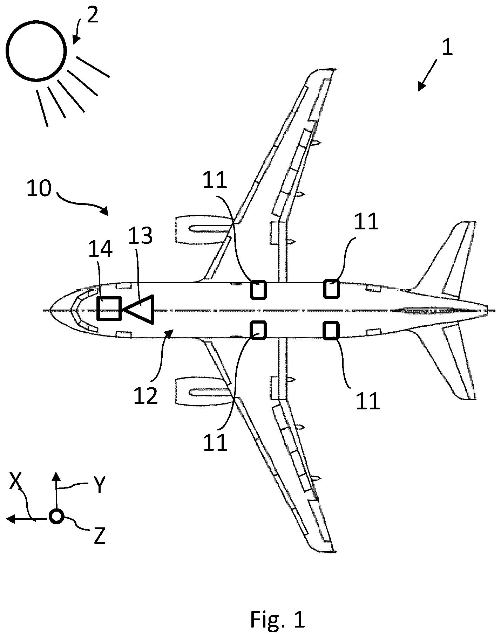

Fig. 1 shows a schematic illustration of an aircraft 1 comprising a system 10 for automatically controlling a dimmable window panel 11 of an aircraft cabin 12 according to an embodiment of the invention.

The system 10 comprises a dimmable window panel 11, a cabin 12, an optical detection unit 13 and a control unit 14.

The dimmable window panel 11 has an adjustable light transmissivity. Exemplarily, the dimmable window panel 11 can comprise a plurality of dimmable windows each having an individually adjustable light transmissivity. Such dimmable windows 11 that are faced to sunlight 2 can be made opaque, while such dimmable windows 11 that are not faced to sunlight 2 can be made clear transparent, for example. In Fig. 1, the dimmable window panel 11 comprises four dimmable windows, two dimmable windows 11 at a right hand side of the aircraft 1 and two dimmable windows 11 at a left hand side of the aircraft 1. Hence, the dimmable window panel 11 can at least partly correspond to a lateral side of a fuselage of the aircraft 1.

The optical detection unit 13 is configured for detecting an illumination level inside the cabin 12. Here, the optical detection unit 13 can comprise a plurality of cameras, which are monitoring the inside of the cabin 12. For example, each camera 13 can monitor one dimmable window 11 or a subgroup of dimmable windows 11 of the plurality of dimmable windows.

Thereby, the optical detection unit 13, for example each camera, can comprise a processing unit 15, which is configured to identify a hotspot area of the illumination level and to allocate the hotspot area to the corresponding dimmable window of the plurality of dimmable windows 11. Thus, the light transmissivity of the corresponding respectively affected dimmable window, here in particular the dimmable windows 11 on the right hand side of the aircraft 1, can be adjusted by the control unit, wherein a rest of the plurality of dimmable windows 11, here in particular the dimmable windows 11 on the left hand side of the aircraft 1, is not affected. That means, the processing unit 15 can identify by video analytics a hotspot area of very bright sunlight 2 coming through one or more dimmable windows of the plurality of dimmable windows 11 in the field of view by analyzing an optical gain, for example by a predetermined contrast level, by a threshold and/or by a clipping detection.

Optionally, the hotspot area can be allocated to the corresponding dimmable window by predefined picture zones in a picture from the cameras 13, wherein each predefined picture zone corresponds to one dimmable window 11.

The control unit 14 is operatively coupled to the dimmable window panel 11 and to the cameras 13. Thereby, the control unit 14 is configured to automatically adjust the light transmissivity based on the illumination level. The control unit 14 can be configured to automatically adjust the light transmissivity such that the illumination level corresponds to a predetermined illumination level. For example, the light transmissivity can be controlled dynamically in real-time.

For example, the control unit 14 can be further configured to provide a manual adaption of the light transmissivity up to a maximum illumination level. Hence, a user or a crew member can adapt the light transmissivity manually without exceeding the maximum illumination level. Therefore, air conditioning efforts due to an increasing cabin temperature by sunlight 2 can be limited and/or reduced. Furthermore, the illumination level in the cabin 12 can be limited to the maximum illumination level such that passengers would not be blinded by sunlight 2, for example. The maximum illumination level can be set by a crew member or by the control unit depending on a daytime or an ambient condition, for example.

Alternatively or additionally, the control unit 14 is further configured to provide a manual adaption of the light transmissivity up to a minimum illumination level. Hence, a user or a crew member can adapt the light transmissivity manually without falling below the minimum illumination level. Furthermore, the illumination level in the cabin 12 can be maintained to the minimum illumination level such that passengers do not need to switch on a lamp, for example, which can reduce energy consumption. The minimum illumination level can be set by a crew member or by the control unit depending on a daytime or an ambient condition, for example.

Alternatively, the control unit 14 is configured to block a manual adaption of the light transmissivity or to provide a manual adaption of the light transmissivity without restrictions. The above described options for manual adaption of the light transmissivity can be switched depending on needs.

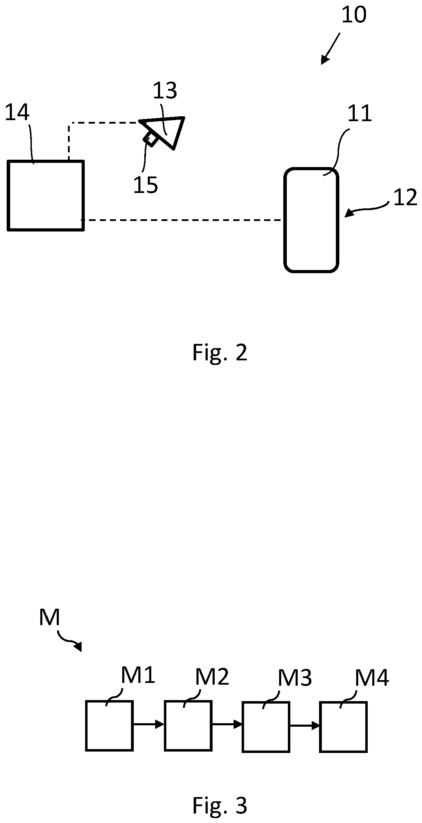

Fig. 2 shows a schematic illustration of a system 10 for automatically controlling a dimmable window panel 11 according to a further embodiment of the invention.

The system 10 comprises a dimmable window panel 11, a cabin 12, an optical detection unit 13 and a control unit 14.

The dimmable window panel 11 has an adjustable light transmissivity. The optical detection unit 13 is configured for detecting an illumination level inside the cabin 12.

Thereby, the optical detection unit 13 can comprise a processing unit 15, which is configured to identify a hotspot area of the illumination level and to allocate the hotspot area to the dimmable window panel 11. That means, the processing unit 15 can identify by video analytics a hotspot area of very bright sunlight 2 coming through the dimmable window panel 11 in the field of view by analyzing an optical gain, for example by a predetermined contrast level, by a threshold and/or by a clipping detection.

For example, the hotspot area can be allocated to the corresponding dimmable window panel 11 by predefined picture zones in a picture from the optical detection unit 13, wherein each predefined picture zone corresponds to one dimmable window panel 11.

Additionally or alternatively, the hotspot area may be allocated to the corresponding dimmable window panel by neural networks, wherein the neural networks are initially configured by sequentially changing the light transmissivity of the dimmable window panel 11 and allocating a changed illumination level in each picture zone to the corresponding dimmable window panel 11. Hence, the allocation of the hotspot area can be provided according to the actual conditions in the cabin, in particular independent of individual conditions and/or configurations. Alternatively or additionally, the neural networks can be initially configured by allocating predefined picture zones to the dimmable window panel 11 based on information from a data base.

Further, the optical detection unit 13 can comprise a means for computer vision processing. Additionally or alternatively, the processing unit 15 is configured to provide computer vision processing. For example, computer vision processing can be provided by a Neural Processing Unit, short NPU. Computer vision is a field of artificial intelligence that enables computers and systems to derive meaningful information from digital images, videos and other visual inputs - and take actions or make recommendations based on that information. Alternatively or additionally, the control unit 14 is configured to provide computer vision processing.

Fig. 3 shows a flow chart for a method M for automatically controlling a dimmable window panel according to a further embodiment of the invention. Specifically, Fig. 3 shows a flow chart for a method M for automatically controlling a dimmable window panel of an aircraft cabin 12.

The method M comprises steps of detecting M1 an illumination level, identifying M2 a hotspot area of the illumination level, automatically adjusting M3 the light transmissivity and providing M4 a manual adaption of the light transmissivity.

In the step of detecting M1, an illumination level inside a cabin 12 is detected, wherein the cabin 12 comprises a dimmable window panel 11 having an adjustable light transmissivity. The dimmable window panel 11 can comprise a plurality of dimmable windows.

In the step of identifying M2, a hotspot area of the illumination level and allocating the hotspot area to the corresponding dimmable window of a plurality of dimmable windows 11. Thus, the light transmissivity of the affected dimmable window 11 can be adjusted, for example by the control unit 14, wherein a rest of the plurality of dimmable windows 11 is not affected. That means, the control unit 14 and/or a processing unit 15 can identify by video analytics a hotspot area of very bright sunlight 2 coming through one or more dimmable windows of the plurality of dimmable windows 11 in the field of view by analyzing an optical gain, for example by a predetermined contrast level, by a threshold and/or by a clipping detection. Hence, the light transmissivity can be adjusted, in particular lowered or increased, by a gain measurement of the optical detection unit 13.

Optionally, the hotspot area can be allocated to the corresponding dimmable window 11 by predefined picture zones in a picture from the optical detection unit 13, wherein each predefined picture zone corresponds to one dimmable window.

Furthermore, the hotspot area can be allocated to the corresponding dimmable window 11 by neural networks, wherein the neural networks are initially configured by sequentially changing the light transmissivity of each dimmable window 11 and allocating a changed illumination level in each picture zone to the corresponding dimmable window. Hence, the allocation of the hotspot area can be provided according to the actual conditions in the cabin, in particular independent of individual conditions and/or configurations. Alternatively or additionally, the neural networks can be initially configured by allocating predefined picture zones to the plurality of dimmable windows 11 based on information from a data base.

In the step of automatically adjusting M3, the light transmissivity is automatically adjusted based on the illumination level by the use of a control unit 14. The control unit 14 is operatively coupled to the dimmable window panel 11. With the plurality of dimmable windows 11 the light transmissivity of each dimmable window 11 is individually adjusted.

In the step of providing M4, a manual adaption of the light transmissivity can be provided up to a maximum illumination level and/or a minimum illumination level.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present invention(s) is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise. This disclosure hereby incorporates by reference the complete disclosure of any patent or application from which it claims benefit or priority.

### Reference list

- 1: aircraft
- 2: sunlight
- 10: system
- 11: dimmable window panel
- 12: cabin
- 13: optical detection unit
- 14: control unit
- 15: processing unit

- M: method
- M1: detecting an illumination level
- M2: identifying a hotspot area of the illumination level
- M3: automatically adjusting the light transmissivity
- M4: providing a manual adaption of the light transmissivity

## Claims

1. System (10) for automatically controlling a dimmable window panel, in particular a dimmable window panel of an aircraft cabin and/or spacecraft cabin, the system (10) comprising:
a dimmable window panel (11) of a cabin (12), wherein the dimmable window panel (11) has an adjustable light transmissivity;
an optical detection unit (13) for detecting an illumination level inside the cabin (12); and
a control unit (14), which is operatively coupled to the dimmable window panel (11) and to the optical detection unit (13), wherein the control unit (14) is configured to automatically adjust the light transmissivity based on the illumination level.

2. System (10) according to claim 1, wherein the control unit (14) is further configured to provide a manual adaption of the light transmissivity up to a maximum illumination level.

3. System (10) according to claim 1 or 2, wherein the control unit (14) is further configured to provide a manual adaption of the light transmissivity up to a minimum illumination level.

4. System (10) according to one of the preceding claims, wherein the dimmable window panel (11) comprises a plurality of dimmable windows each having an individually adjustable light transmissivity.

5. System (10) according to claim 4, wherein the optical detection unit (13) comprises a processing unit (15), which is configured to identify a hotspot area of the illumination level and to allocate the hotspot area to the corresponding dimmable window of the plurality of dimmable windows (11).

6. System (10) according to claim 4 or 5, wherein the hotspot area is allocated to the corresponding dimmable window by predefined picture zones in a picture from the optical detection unit (13), wherein each predefined picture zone corresponds to one dimmable window (11).

7. System (10) according to one of the claims 4 to 6, wherein the hotspot area is allocated to the corresponding dimmable window by neural networks, wherein the neural networks are initially configured by sequentially changing the light transmissivity of each dimmable window (11) and allocating a changed illumination level in each picture zone to the corresponding dimmable window.

8. System (10) according to one of the preceding claims, wherein the optical detection unit (13) comprises a means for computer vision processing, and/or wherein the processing unit (15) is configured to provide computer vision processing.

9. Aircraft (1) or spacecraft with a system (10) according to one of the preceding claims.

10. Method (M) for automatically controlling a dimmable window panel, in particular a dimmable window panel of an aircraft cabin and/or spacecraft cabin, the method (M) comprising the steps of:
detecting (M1) an illumination level inside a cabin (12), which comprises a dimmable window panel (11) having an adjustable light transmissivity; and
automatically adjusting (M3) the light transmissivity based on the illumination level by the use of a control unit (14), which is operatively coupled to the dimmable window panel (11).

11. Method (M) according to claim 10, further comprising a step of providing (M4) a manual adaption of the light transmissivity up to a maximum illumination level and/or a minimum illumination level.

12. Method (M) according to claim 10 or 11, wherein the dimmable window panel (11) comprises a plurality of dimmable windows, wherein the light transmissivity of each dimmable window (11) is individually adjusted.

13. Method (M) according to one of claims 10 to 12, further comprising a step of identifying (M2) a hotspot area of the illumination level and allocating the hotspot area to the corresponding dimmable window of a plurality of dimmable windows (11).

14. Method (M) according to claim 13, wherein the hotspot area is allocated to the corresponding dimmable window (11) by predefined picture zones in a picture from the optical detection unit (13), wherein each predefined picture zone corresponds to one dimmable window.

15. Method (M) according to 13 or 14, wherein the hotspot area is allocated to the corresponding dimmable window (11) by neural networks, wherein the neural networks are initially configured by sequentially changing the light transmissivity of each dimmable window (11) and allocating a changed illumination level in each picture zone to the corresponding dimmable window.
